Europäisches Patentamt

(19) European Patent Office

Office européen des brevets

(11) Veröffentlichungsnummer: **0 138 919**
**B2**

(12) **NEUE EUROPÄISCHE PATENTSCHRIFT**

(45) Veröffentlichungstag der neuen Patentschrift:
**29.08.90**

(51) Int. Cl.⁵: **B 60 Q 3/02**

(21) Anmeldenummer: **84901322.2**

(22) Anmeldetag: **14.03.84**

(86) Internationale Anmeldenummer:
**PCT/DE84/00057**

(87) Internationale Veröffentlichungsnummer:
**WO 84/03670 27.09.84 Gazette 84/23**

(54) **SCHALTUNGSANORDNUNG FÜR DIE INNENBELEUCHTUNG EINES KRAFTFAHRZEUGES.**

(30) Priorität: **17.03.83 DE 3309548**

(43) Veröffentlichungstag der Anmeldung:
**02.05.85 Patentblatt 85/18**

(45) Bekanntmachung des Hinweises auf die
Patenterteilung:
**10.12.86 Patenblatt 86/50**

(45) Bekanntmachung des Hinweises auf die
Entscheidung über den Einspruch:
**29.08.90 Patentblatt 90/35**

(84) Benannte Vertragsstaaten:
**DE FR GB SE**

(56) Entgegenhaltungen:
**DE-A-2 854 729**
**US-A-4 115 723**
**US-A-4 122 371**
**US-A-4 123 668**

(73) Patentinhaber: **AUDI AG**
**Auto-Union-Strasse 1 Postfach 220**
**D-8070 Ingolstadt (DE)**

(72) Erfinder: **Bier, Axel**
**Danziger Strasse 1**
**D-6953 Gundelsheim (DE)**

(74) Vertreter: **Speidel, Eberhardt**
**Postfach 1320 Waldpromenade 26**
**D-8035 Gauting (DE)**

**Die Akte enthält technische Angaben, die nach
dem Eingang der Anmeldung eingereicht
wurden und die nicht in dieser Patentschrift
enthalten sind.**

**Beschreibung**

Die Erfindung bezieht sich auf eine Schaltungsanordnung für die Innenbeleuchtung eines mit einem Zündschalter versehenen Kraftfahrzeuges gemäß dem Oberbegriff des Anspruchs 1.

Mit derartigen Schaltungen wird erreicht, daß das Anlegen der Sicherheitsgurte und das Einstecken des Zündschlüssels bzw. das Absperren der Fahrertür von außen bei eingeschalteter Innenbeleuchtung erfolgen kann. Während normalerweise nur ein Zeitglied vorgesehen ist, das beim Öffnen einer Fahrzeugtür angesteuert wird und die Innenbeleuchtung für einen bestimmten Zeitraum einschaltet, der beim Ein- und Aussteigen gleich ist, ist aus der DE-A 28 54 729 eine Schaltung bekannt, bei der ein zweites Zeitglied vorgesehen ist, das durch einen Auslöseschalter über den Türkontaktschalter angesteuert wird und beim Schließen der Tür die Innenbeleuchtung für eine weitere Leuchtdauer einschaltet, derart, daß die beim Einsteigen wirksame Leuchtdauer wesentlich länger ist als die Leuchtdauer beim Aussteigen. Damit wird dem Bedürfnis Rechnung getragen, daß nach dem Einsteigen zum Anlegen der Sicherheitsgurte, zum Einstellen der Sitze, zum Anlassen des Motors u.s.w. eine längere Leuchtdauer erforderlich ist, als nach dem Aussteigen. Beim Schließen des Zündschalters wird die Wirksamkeit des zweiten Zeitgliedes beendet, also die Innenbeleuchtung ausgeschaltet. Nachteilig ist jedoch, daß die Fahrzeugbatterie entladen werden kann, wenn eine Fahrzeugtür versehentlich über einen längeren Zeitraum offengelassen wird, da die Innenbeleuchtung über den in diesem Fall geschlossenen Türkontaktschalter eingeschaltet bleibt.

Die US-A-4 122 371 beschreibt eine Schaltung, bei welcher der Türkontakt bei geöffneter Tür die Innenbeleuchtung einschaltet und nach Schließen der Tür ein Zeitglied aktiviert, das nach Ablauf einer bestimmten Zeit die Innenbeleuchtung ausschaltet. Außerdem wird auch bei Ausschalten der Zündung automatisch die Innenbeleuchtung für einen bestimmten Zeitraum eingeschaltet, der kürzer ist als der Zeitraum nach Schließen der Tür, und beim Einschalten der Zündung die Innenbeleuchtung sofort ausgeschaltet. Auch diese Schaltung kann ein Entladen der Batterie bei einem längeren Offenstehen der Tür nicht verhindern.

Aus der US-A-4 115 723 ist eine Schaltungsanordnung bekannt geworden, die sich ausschließlich damit befaßt, ein Entladen der Fahrzeugbatterie durch die Innenbeleuchtung zu vermeiden, wenn diese aufgrund einer offenstehenden Fahrzeugtür über einen längeren Zeitraum eingeschaltet bleibt. Zu diesem Zweck ist eine eigene Schaltung mit einem von einem Türbetätigungsdrücker aktivierten Zeitglied vorgesehen, das eine bestimmte Zeit nach dem Betätigen des Türdrückers die Innenbeleuchtung ausschaltet, gleichgültig, ob die Tür geöffnet oder geschlossen wurde. Mit dem Einschalten der Zündung wird die Innenbeleuchtung sofort ausgeschaltet. Mit dieser bekannten Schaltungsanordnung wird zwar ein Entladen der Batterie vermieden, jedoch mit einem erheblichen Aufwand, da ein eigener Schaltkreis vorgesehen werden muß und alle Türschlösser mit Kontakten versehen werden müssen, die verdrahtet werden müssen. Darüber hinaus besteht die Unannehmlichkeit, daß die Innenbeleuchtung bei geöffneter Fahrzeugtür nicht brennt, wenn der Fahrzeugmotor läuft.

Der Erfindung liegt die Aufgabe zugrunde, eine Schaltungsanordnung zu schaffen, mit der mit Hilfe eines einzigen Schaltkreises die Innenbeleuchtung sowohl nach dem Schließen der Fahrzeugtür als auch nach dem Öffnen der Fahrzeugtüren (nur) während eines bestimmten Zeitraumes eingeschaltet bleibt, um einerseits, wie bekannt, das Anlegen der Sicherheitsgurte etc. zu erleichtern, andererseits ein Entladen der Fahrzeugbatterie zu vermeiden.

Diese Aufgabe wird erfindungsgemäß durch die Merkmale des Kennzeichens des Anspruchs 1 gelöst.

Bei der erfindungsgemäßen Schaltung wird bei offener Tür (also geschlossenem Türkontakt) die Innenbeleuchtung nach einigen Minuten ausgeschaltet, jedoch nur dann, wenn der Zündschalter offen ist, der Motor also nicht läuft, da bei laufendem Motor ein Entladen der Batterie normalerweise nicht möglich ist und es unzumutbar wäre, daß bei laufendem Motor, also normalerweise besetztem Fahrzeug, die Innenbeleuchtung erlischt, wenn eine Fahrzeugtür längere Zeit offen ist.

Vorzugsweise bleibt das zweite Zeitglied durch Schließen des Zündschalters gesetzt, so daß nach dem Öffnen der Tür und Einschalten der Zündung die Innenbeleuchtung eingeschaltet bleibt, auch wenn eine Fahrzeugtür über einen längeren Zeitraum offensteht.

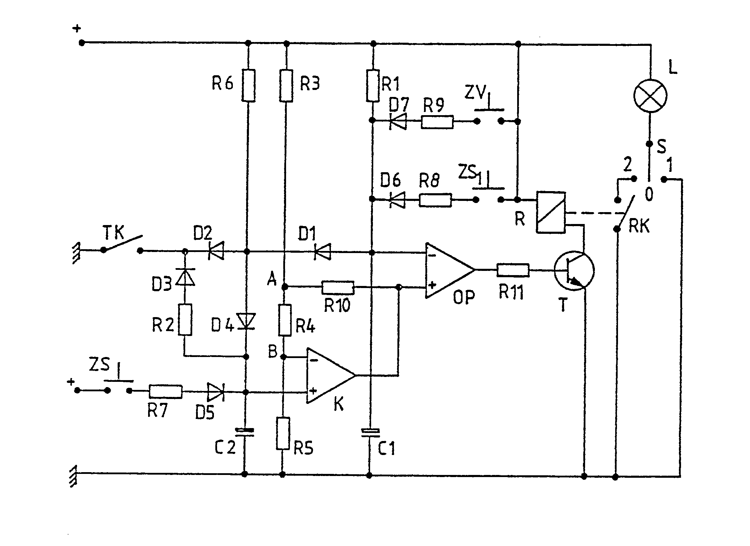

Ein Ausführungsbeispiel der Erfindung wird im folgenden unter Bezugnahme auf die Zeichnung beschrieben.

Die Innenraumleuchte L eines Kraftfahrzeuges ist einerseits an den Pluspol der Fahrzeugbatterie angeschlossen und kann andererseits über einen Handschalter S entweder direkt (Stellung 1) oder über einen Relaiskontakt RK (Stellung 2) mit dem Minuspol, das heisst, mit Masse verbunden werden. Der Schalter S hat ausserdem eine offene Stellung O. Der Relaiskontakt RK wird geschlossen, wenn die Wicklung des Relais R von Strom durchflossen wird. Diese Wicklung ist einerseits mit dem Pluspol der Fahrzeugbatterie verbunden und kann andererseits durch einen Transistor T mit Masse verbunden werden. Die Basis des Transistors T ist mit dem Ausgang eines Operationsverstärkers OP verbunden, dessen invertierender (−) Eingang über einen Widerstand R1 mit dem Pluspol und über einen bei geöffneter Fahrzeugtür geschlossenen Türkontaktschalter TK und zwei Dioden D1 und D2 mit Masse verbunden ist. Ausserdem ist zwischen dem −Eingang des Operationsverstärkers OP und Masse ein Kondensator C1 angeordnet. Der nicht invertierende (+) Eingang des Operationsverstärkers OP ist an eine Referenzspannungsquelle A angeschlossen, die durch die Widerstände R3 und R4, R5 gebildet ist.

Der Widerstand R1 und der Kondensator C1 bilden ein erstes Zeitglied, das nach dem Schliessen der Fahrzeugtür, dass heisst, nach Offnen des zuvor geschlossenen Türkontaktschalters TK die Erregung des Relais R über einen bestimmten Zeitraum weiter aufrecht erhält. Durch Öffnen von TK steigt das Potential am −Eingang von OP von dem Wert der Summe der Durchlassspannungen von D1 und D2, das heisst, von 1,4 V, stetig an, während der +Eingang auf einem Potential von beispielsweise 8 V liegt. Damit liegt die Basis des Transistors T vor und nach dem Schliessen von TK an Plus, sodass der Transistor T weiterhin durchsteuert und die Leuchte L brennt, wenn der Handschalter S in der Stellung 2 ist. Steigt durch die Aufladung des Kondensators C1, der über den Widerstand R1 an plus liegt, der Spannungswert am −Eingang von OP allmählich über den Wert des Potentials des +Eingangs, so wird der Ausgang des Operationsverstärkers OP und damit die Basis des Transistors T auf Masse umgeschaltet, wodurch der Transistor T sperrt, das Relais R abfällt, der Relaiskontakt RK geöffnet wird und die Leuchte L erlischt.

Wird die Tür geöffnet, so wird der Türkontakt TK geschlossen, der −Eingang von OP über die Dioden D1 und D2 an Masse gelegt, wodurch sein Potential niedriger wird als das Potential des +Einganges, sodass sein Ausgang und damit die Basis des Transistors T mit dem Pluspol verbunden wird, der Transistor durchsteuert und die Leuchte L brennt.

Um zu verhindern, dass die Fahrzeugbatterie bei längerem Offenstehen einer Fahrzeugtür durch ständiges Brennen der Leuchte L entladen wird, ist ein zweites Zeitglied R2, C2 vorgesehen, das bewirkt, dass der Stromkreis des Relais R nach Ablauf einer gewissen Zeit nach Öffnen der Tür unterbrochen wird. Zu diesem Zweck ist der +Eingang des Operationsverstärkers OP mit dem Ausgang eines Komparators K verbunden, dessen invertierender (−) Eingang mit einer Referenzspannungsquelle B verbunden ist, die durch die Widerstände R5 und R4, R3 gebildet ist, und dessen nicht invertierender (+) Eingang über den Widerstand R2 des zweiten Zeitgliedes, eine Diode D3 und den bei geöffneter Tür geschlossenen Türkontaktschalter TK mit Masse verbunden ist. Der Kondensator C2 des zweiten Zeitgliedes ist zwischen den +Eingang des Komparators K und Masse gelegt. Wird die Tür geöffnet, also der Türkontakt TK geschlossen, so liegt der +Eingang des Komparators K zunächst durch den zuvor über den niederohmigen Widerstand R6 und die Diode D4 aufgeladenen Kondensator C2 auf einem höheren Potential als der −Eingang, das heisst, der Ausgang des Komparators ist offen. Durch Entladen des Kondensators C2 über den hochohmigen Widerstand R2 sinkt das Potential des +Einganges des Komparators K stetig ab, bis der Wert der Kondensatorspannung von C2 unter das Potential des −Eingangs abgesunken ist, was zur Folge hat, dass der Ausgang des Komparators und damit der +Eingang des Operationsverstärkers OP, der über den hochohmigen Widerstand R10 von der Referenzspannungsquelle in Punkt A entkoppelt ist, mit Masse verbunden wird. Dadurch ist das Potential des +Einganges des Operationsverstärkers OP, dessen Wert kleiner als 0,7 V ist, niedriger als das Potential des −Einganges, das aufgrund des Spannungsabfalls der Dioden D1, D2 in Durchlassrichtung auf etwa 1,4 V liegt. Folglich wird der Ausgang des Operationsverstärkers OP und damit die Basis des Transistors T mit Masse verbunden, der Transistor T sperrt, das Relais R fällt ab, der Relaiskontakt RK öffnet sich und die Leuchte L erlischt. Das zweite Zeitglied R2, C2 hat eine Verzögerungszeit von beispielsweise 4 Minuten, während die Verzögerungszeit des ersten Zeitgliedes R1, C1 beispielsweise 30 Sekunden beträgt.

Um zu verhindern, dass die Leuchte L erlischt, wenn eine Fahrzeugtür bei eingeschalteter Zündung, also laufendem Motor, über einen längeren Zeitraum geöffnet wird, kann der +Eingang des Komparators K durch den Zündschalter ZS über den niederohmigen Widerstand R7 und die Diode D5 auch direkt mit dem Pluspol verbunden werden. Durch Schliessen von ZS wird die Entladung des Kondensators C2 durch den hochohmigen Widerstand R2 unwirksam, d.h., der +Eingang des Komparators K bleibt auf einem höheren Potential als der −Eingang, sodass die Verbindung zwischen dem Ausgang des Komparators K und dem +Eingang des Operationsverstärkers OP unterbrochen bleibt und der leitende Zustand des Transistors T aufrechterhalten wird.

Mit einem Schalter ZS1, der bei eingeschalteter Zündung geschlossen ist, kann der −Eingang des Operationsverstärkers OP über einen niederohmigen Widerstand R8 und eine Diode D6 an den Pluspol der Fahrzeugbatterie gelegt werden. Dadurch wird erreicht, dass bei geschlossener Tür, also offenem Türkontakt TK, die Leuchte L sofort erlischt, wenn die Zündung eingeschaltet wird, da dann das Potential des −Einganges höher liegt als das Potential des +Einganges und somit der Ausgang des Operationsverstärkers OP und damit die Basis des Transistors T mit Masse verbunden wird. Für Fahrzeuge mit Zentralverriegelung ist parallel zu dem Schalter ZS1 ein Schalter ZV angeordnet, der bei betätigter Zentralverriegelung geschlossen ist und den −Eingang von OP über einen niederohmigen Widerstand R9 und eine Diode D7 mit dem Pluspol der Fahrzeugbatterie verbindet, was ein sofortiges Erlöschen der Leuchte L bewirkt. Durch die Wahl der Widerstandswerte von R8 und R9 lässt sich z.B. das Erlöschen der Leuchte nach Schliessen von ZS1 oder ZV um Bruchteile von Sekunden bis zu einigen Sekunden beliebig verzögern.

Selbstverständlich sind viele Abwandlungen des dargestellten Ausführungsbeispiels möglich, ohne den Rahmen der Erfindung zu verlassen. So ist für den Fachmann geläufig, dass die gleichen Funktionen sowohl mit einem integrierten Zweifach-Komparatorbaustein, einem dualen Operationsverstärkerschaltkreis oder auch mit Schmitt-Triggern in TTL- oder CMOS-Technik ausgeführt werden können, wie auch anstelle eines RC-Gliedes als Zeitglied andere elektronische Bausteine, beispielsweise ein Monoflop, verwendet werden können. Ist die Belastung gering, besteht also die Innenbeleuchtung aus wenigen Leuchten, kann das Relais Rentfallen und der Emitter des Transistors T direkt mit dem Kontakt 2 des Handschalters S verbunden werden.

**Patentansprüche**

1. Schaltungsanordnung für die Innenbeleuchtung (L) eines mit einem Zündschloß versehenen Kraftfahrzeuges, mit einem ersten Zeitglied (C1, R1), das durch einen beim Schließen einer Fahrzeugtür geöffneten Türkontaktschalter (TK) angesteuert wird und die Innenbeleuchtung für eine bestimmte Zeit nach dem Schließen der Tür eingeschaltet läßt, wobei die Innenbeleuchtung (L) über einen Transistor (T) eingeschaltet wird, dessen Basis mit dem Ausgang eines Operationsverstärkers (OP) verbunden ist, dessen +Eingang an einer Referenzspannung liegt und dessen −Eingang bei geschlossenem Türkontaktschalter (TK) auf einem niedrigeren Potential und bei offenem Türkontaktschalter über das erste Zeitglied (C1, R1) auf einem höheren Potential liegt als sein +Eingang, dadurch gekennzeichnet, daß der +Eingang des Operationsverstärkers (OP) mit dem Ausgang eines Komparators (K) verbunden ist, dessen −Eingang an einer Referenzspannung (Punkt B) liegt und dessen +Eingang durch ein zweites Zeitglied (R2, C2) nach Ablauf einer bestimmten Zeit nach Schließen des Türkontaktschalters (TK) auf ein niedrigeres Potential und durch Öffnen des Türkontaktschalters (TK) oder durch Schließen des Zündschalters (ZS) auf ein höheres Potential gebracht wird als sein −Eingang.

2. Schaltungsanordnung nach Anspruch 1, dadurch gekennzeichnet, daß das zweite Zeitglied (R2, C2) durch Schließen des Zündschalters (ZS) gesetzt bleibt.

**Revendications**

1. Dispositif de commutation pour l'éclairage interieur (L) d'un véhicule a moteur équipée d'un contacteur d'allumage, comportant un premier système temporisé (C1, R1) lequel est commandé par un contacteur de porte (TK) qui s'ouvre au moment de la fermeture d'une porte du véhicule et assure que l'éclairage interieur reste allumé pendant un certain temps après la fermeture de la porte, près de quoi l'allumage de l'éclairage interieur (L) est assuré par l'intermédiaire d'un transistor (T) dont la base est reliée à la sortie d'un amplificateur opérationnel (OP), l'entrée positive de ce dernier étant raccordée à une tension de référence et l'entrée négative, grâce au premier système temporisè (C1, R1), à un potentiel plus bas — lorsque le contacteur de porte (TK) est fermé — ou à un potentiel plus élevé — lorsque le contacteur de porte est ouvert — que son entrée positive, caractérisé par ce que l'entrée positive de l'amplificateur opèrationnel (OP) est reliée à la sortie d'un comparateur (K) dont l'entrée négative est raccordée à une tension de référence (point B) et l'entrée positive est amenée — au bout d'un certain temps après la fermeture du contacteur de porte (TK) à un potentiel plus bas, par une deuxiéme système temporisé (R2, C2), et à un potentiel plus élevé, par l'ouverture du contacteur de porte (TK) ou par la fermeture du contacteur d'allumage (ZS), que son entrée négative.

2. Dispositiv de commutation suivant revendication 1, caractérisé par ce que le deuxième système temporisé (R2, C2) reste en circuit après la fermeture du contacteur d'allumage (ZS).

**Claims**

1. Switching device for the interior lighting (L) of a motor vehicle provided with an ignition lock, with a first timing element (C1, R1) that is controlled by a door contact switch (TK), which is opened when a door of the vehicle is closed, and that permits the interior lighting to be left switched on for a specified period of time after the door is closed, wherein the interior lighting (L) is switched on by a transistor (T) the base of which is connected to the output of an operational amplifyer (OP) the positive input of which amplifyer is connected to a reference voltage and the negative input of which is at a lower potential than the positive input when the door contact switch (TK) is closed, and through the first timing element (C1, R1) at a higher potential than the positive input when the door switch contact (TK) is opened, characterized in that the positive input of the operational amplifyer (OP) is connected to the output of a comparator (K) the negative input of which is connected to a reference voltage (Point B) and the positive input of which is brought to a lower potential than its negative input by a second timing element (R2, C2) after elapse of a specified time after closing of the door switch contact (TK) and to a higher potential than its negative input by opening of the door contact switch (TK) or by closing the ignition switch (ZS).

2. Switching device according to claim 1, characterized in that the second timing element (R2, C2) remains set by closing the ignition switch (ZS).

EP 0 138 919 B2

1